# FASCICULE DE BREVET EUROPEEN

(11) **EP 1 371 541 B1**
(45) Date de publication et mention de la délivrance du brevet: **04.10.2006**
(21) Numéro de dépôt: 03291415.2
(22) Date de dépôt: 13.06.2003
(51) Int. Cl.: B62D 6/00, B62D 101/00, B62D 103/00, B62D 111/00, B62D 113/00, B62D 137/00

(54) **Procédé de détermination du rapport de démultiplication d'une direction de véhicule automobile**
Verfahren zum Bestimmen des Übersetzungverhältnisses einer Kraftfahrzeuglenkung
Procedure for the determination of the transmission ratio of a vehicle steering system

(30) Priorité: 13.06.2002 FR 0207288
(43) Date de publication de la demande: 17.12.2003
(73) Titulaire: Renault s.a.s., 92100 Boulogne Billancourt (FR)
(72) Inventeur: Auvinet, Yannick, 27000 Evreux (FR); Azzalini, Maximilien, 78180 Montigny Le Bretonneux (FR); Coffin, Laurent, 27490 Ecardenville s/Eure (FR)

(56) Documents cités:
- EP-A- 1 157 915
- DE-A- 4 120 069
- US-A- 5 884 724

## Description

La présente invention est relative à un procédé pour faire varier le rapport de démultiplication de la direction d'un véhicule automobile.

Un tel procédé est connu par US 5 884 724. Dans ce cas, les roues directrices du véhicule sont actionnées par des moteurs respectifs qui sont commandés à leur tour par un dispositif de commande capable de calculer le rapport de démultiplication de la direction en fonction de différents paramètres parmi lesquels on peut citer l'angle de consigne de braquage du volant, la vitesse longitudinale du véhicule et un paramètre qui traduit la vitesse latérale du véhicule. Le dispositif de commande calcule un rapport de démultiplication en se basant sur une cartographie tridimensionnelle qui, pour chaque couple de valeurs des paramètres angle de braquage-vitesse du véhicule, mémorise une valeur de rapport de démultiplication de la direction.

La cartographie présente des paliers de telle sorte que pendant la conduite, la variation du rapport de démultiplication peut présenter des transitions brusques lorsque les conditions de conduite changent par exemple par une grande accélération ou décélération du véhicule. En outre, le procédé antérieur ne permet pas de tenir compte de certains paramètres relevant du confort de conduite ou de l'aspect sécuritaire du comportement du véhicule.

L'invention a pour but de perfectionner le procédé de l'art antérieur.

L'invention a donc pour objet un procédé pour déterminer le rapport de démultiplication de la direction d'un véhicule automobile, cette direction comprenant pour chacune des roues directrices de celui-ci, un actionneur qui est commandé par un signal de pilotage établi par l'intermédiaire d'un calculateur, ce dernier étant agencé pour élaborer les signaux de pilotage par l'intermédiaire d'une cartographie tridimensionnelle définissant les valeurs dudit rapport de démultiplication en fonction de la vitesse longitudinale du véhicule et de l'angle de consigne instantané donné par le volant de direction, le procédé consistant, au cours d'itérations successives, à relever la vitesse longitudinale du véhicule et l'angle de consigne instantané de rotation du volant de direction de celui-ci, le rapport de démultiplication étant calculé au cours de chacune desdites itérations par extraction de la valeur de ce rapport de ladite cartographie en fonction des valeurs instantanées de ladite vitesse et dudit angle,
caractérisé en ce que ladite cartographie est établie de telle manière que, pour chaque valeur de l'angle de rotation dudit volant, la relation entre la vitesse longitudinale du véhicule et le rapport de démultiplication suit une courbe à dérivée non nulle quand le véhicule est en marche avant.

Dans ces conditions, le procédé permet d'éviter toute variation brusque du rapport de démultiplication, ce qui est ressenti par le conducteur du véhicule comme un élément de confort de conduite important.

Selon d'autres particularités intéressantes de l'invention:
le procédé consiste également à relever les accélérations longitudinale et transversale dudit véhicule, à calculer, au cours de chaque itération, un indice de criticité en fonction des valeurs instantanées desdites accélérations et de la valeur dudit rapport de démultiplication calculée au cours de l'itération précédente, et à déterminer le rapport de démultiplication de l'itération en cours à partir d'une valeur située hors du tracé de ladite cartographie, si l'indice de criticité dépasse au moins un seuil prédéterminé;
le procédé consiste également à calculer un gradient temporel de variation dudit rapport de démultiplication calculé au cours des itérations successives, et à déterminer le rapport de démultiplication de l'itération en cours, en fonction de la valeur de ce gradient temporel lorsque l'indice de criticité dépasse un premier seuil dont le franchissement vers le haut est considéré comme représentatif de la perte d'une situation de confort telle que ressentie par le conducteur du véhicule;
ledit gradient temporel appliqué au cours d'une itération en cours est déterminé en fonction desdites accélérations longitudinale et latérale et de la valeur dudit rapport de démultiplication calculé au cours de l'itération précédente;
le procédé consiste également, pendant une itération en cours, à maintenir ledit rapport de démultiplication à la valeur calculée au cours de l'itération précédente, lorsque ledit indice de criticité dépasse un deuxième seuil qui est supérieur audit premier seuil et dont le franchissement vers le haut est considéré comme représentatif de la perte d'une situation de sécurité pour la conduite du véhicule;
le procédé consiste également, pendant les itérations au cours desquelles le rapport de démultiplication est maintenu constant par franchissement dudit second seuil, à surveiller ledit indice de criticité et, lorsque celui-ci franchit ledit second seuil vers le bas, à calculer ledit rapport de démultiplication en fonction dudit gradient temporel au cours des itérations suivantes;
le procédé consiste en outre à relever la vitesse de lacet dudit véhicule, à déterminer un intervalle prédéterminé de variation de ladite vitesse de lacet, pendant les itérations en cours au cours desquelles ledit rapport de démultiplication est calculé en fonction dudit gradient temporel, à surveiller ledit indice de criticité et lorsque celui-ci franchit vers le bas ledit premier seuil et lorsque simultanément ladite vitesse de lacet varie d'une valeur inférieure audit intervalle de variation prédéterminée, à restaurer un régime de calcul dudit rapport de démultiplication uniquement sur la base de ladite cartographie;
ladite cartographie est mise en oeuvre, ledit indice de criticité est calculé et/ou ledit gradient temporel est calculé à l'aide des mathématiques du flou (logique floue);
le procédé consiste également à engendrer un signal représentatif de la sélection de la marche arrière du véhicule, et à déterminer le rapport de démultiplication en fonction d'une cartographie tridimensionnelle de marche arrière, différente de ladite cartographie, lorsque ledit signal indique une marche arrière du véhicule, ladite cartographie de marche arrière définissant l'évolution dudit rapport de multiplication en fonction de l'angle de consigne de braquage du volant de direction du véhicule et la vitesse longitudinale de celui-ci;
ladite cartographie de marche arrière définit une limite de vitesse pour toute valeur possible de l'angle de consigne de braquage, et pour des valeurs de vitesse situées en dessous de cette limite de vitesse, le rapport présente une valeur relativement faible et au-delà de cette limite de vitesse, le rapport croît très brusquement pour toutes les valeurs d'angle de consigne.

En outre, il peut être avantageux de déclencher sélectivement la mise en oeuvre du procédé à l'aide de ladite cartographie de marche avant ou à l'aide de cette cartographie complété par la prise en compte de l'indice de criticité et ou du gradient temporel tels que définis ci-dessus au moyen d'un sélecteur de stratégie à la disposition du conducteur du véhicule.

D'autres caractéristiques et avantages de la présente invention apparaîtront au cours de la description qui va suivre, donnée uniquement à titre d'exemple et faite en se référant aux dessins annexés sur lesquels:
la figure 1 représente un exemple de schéma synoptique général d'un dispositif de commande mettant en oeuvre le procédé selon l'invention permettant de faire varier le rapport de démultiplication de la direction d'un véhicule automobile;
la figure 2 représente une cartographie tridimensionnelle selon laquelle le procédé de l'invention peut calculer le rapport de démultiplication en marche avant du véhicule;
la figure 3 est une courbe bidimensionnelle extraite de la cartographie de la figure 2;
la figure 4 est un schéma synoptique d'un bloc de calcul utilisé dans le dispositif représenté sur la figure 1;
les figures 5, 6 et 7 représentent schématiquement les traitements en logique floue utilisés pour la mise en oeuvre du procédé de l'invention;
les figures 8 et 9 représentent des graphiques illustrant le fonctionnement du bloc de calcul de la figure 4;
la figure 10 est un organigramme illustrant le déroulement du procédé selon l'invention;
la figure 11 est un diagramme de modélisation illustrant comment dans certaines circonstances de conduite du véhicule, le procédé de l'invention détermine le rapport de démultiplication;
la figure 12 illustre un cas concret de détermination du rapport de démultiplication lors de la mise en oeuvre à titre d'essai du procédé de l'invention; et
la figure 13 montre une cartographie tridimensionnelle selon laquelle le rapport de démultiplication de la direction d'un véhicule peut être déterminé lors d'une marche arrière.

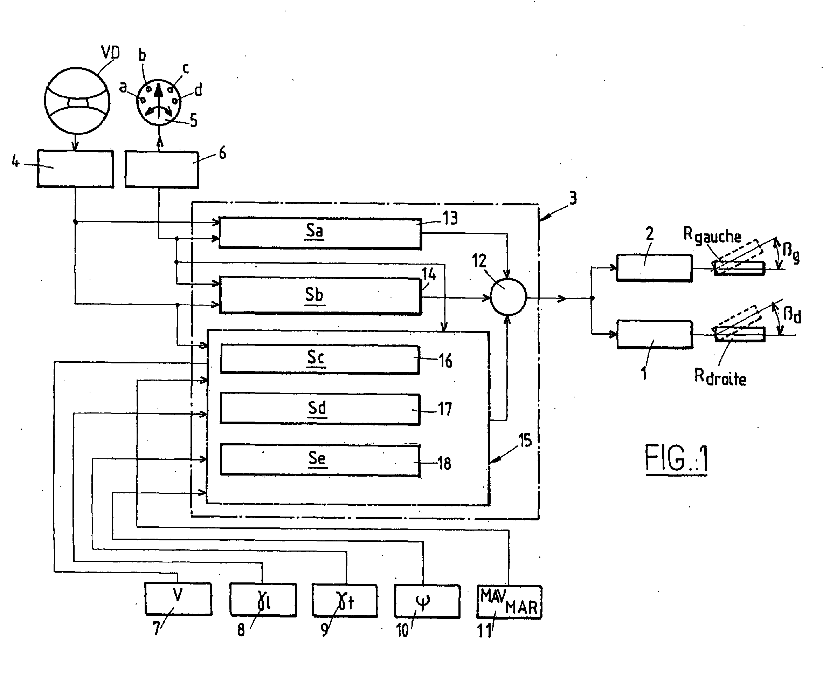

Sur la figure 1, on a représenté un schéma synoptique d'un exemple de réalisation préféré d'une direction à rapport de démultiplication variable selon l'invention.

Les roues directrices R_{droite} et R_{auche} d'un véhicule automobile sont commandées respectivement par des actionneurs 1 et 2 qui peuvent être réalisés de toute manière connue en soi par exemple sous la forme d'unités électriques ou hydrauliques. Chaque actionneur 1, 2 commande l'angle de braquage β_{g}, β_{d} de sa roue associée. A cet effet, les actionneurs 1, 2 sont connectés à un calculateur 3 chargé d'élaborer la stratégie de braquage appropriée en fonction d'une série de paramètres. Ainsi, le calculateur 3 est connecté à un capteur d'angle 4 du volant VD, qui engendre une consigne de braquage selon la volonté du conducteur du véhicule. De préférence, un sélecteur de stratégie 5, monté par exemple sur le tableau de bord du véhicule, est à la disposition du conducteur pour lui permettre de choisir parmi plusieurs stratégies de détermination du rapport de démultiplication, à savoir:
a) une stratégie Sa à rapport de démultiplication fixe;
b) une stratégie Sb à rapport de démultiplication variable selon la loi de variation dite de Ackermann qui impose, de façon connue par les spécialistes, un angle de braquage légèrement différent de chaque roue directrice pour chaque angle de consigne de braquage choisi avec le volant VD; cette loi peut être mémorisée au préalable dans la mémoire (non représentée) du calculateur 3;
c) une stratégie Sc à rapport de démultiplication variable selon une loi dite "à surface lisse" appelée aussi stratégie "de premier niveau";
d) une stratégie Sd à rapport de démultiplication variable selon une loi dite "à surface lisse corrigée" selon laquelle la stratégie "à surface lisse" est complétée en fonction d'autres paramètres tels que par exemple l'accélération transversale et/ou l'accélération longitudinale du véhicule, des critères de sécurité et autres; cette stratégie peut également être qualifiée de "premier et deuxième niveaux combinés".
e) une stratégie Se à rapport de démultiplication variable pour la marche arrière

Bien entendu, les notions mentionnées en c) et en d) seront décrites en détail dans la description qui va suivre.

Le sélecteur 5 est relié au calculateur 3 par l'intermédiaire d'une interface analogique/numérique 6.

Le calculateur 3 est également connecté aux capteurs suivants qui lui fournissent des signaux représentatifs de certains paramètres propres au véhicule. Ainsi, ces capteurs engendrent:
- capteur 7: un signal de vitesse longitudinale (V);
- capteur 8: un signal d'accélération longitudinale (γₗ);
- capteur 9: un signal d'accélération latérale (γₜ);
- capteur 10: un signal de vitesse de lacet (Ψ̇); et
- capteur 11: un signal représentatif de la marche avant ou de la marche arrière (MAV/MAR).

Le capteur 11 est destiné à activer ses stratégies Sa à Sd lorsque le véhicule se déplace en marche avant et la stratégie Se lorsqu'il roule en marche arrière.

Dans l'exemple de réalisation décrit, le calculateur 3 est conçu pour pouvoir mettre sélectivement en oeuvre toutes les stratégies énumérées ci-dessus qui peuvent donc être sélectionnées par le conducteur du véhicule à l'aide du sélecteur 5. Elles aboutissent toutes à la détermination d'un rapport de démultiplication, fixe ou variable selon le cas, entre l'angle de rotation du volant VD et l'angle de braquage des roues, ce rapport étant concrétisé au niveau du signal de pilotage des actionneurs 1 et 2.

Le calculateur 3 élabore ces stratégies à l'aide d'un programme approprié faisant appel de préférence aux mathématiques du flou (logique floue), comme décrit ci-après. Les principales fonctionnalités exécutées par ce programme sont schématisées par des blocs fonctionnels sur la figure 1. Le programme est conçu pour recalculer par itérations successives les signaux de pilotage à appliquer aux actionneurs 1 et 2 pour amener les roues à braquer sur les angles respectifs β_{d} et β_{g}.

Ainsi, sur la figure 1, un bloc fonctionnel OU 12 permet de transmettre sélectivement des signaux de pilotage aux actionneurs 1 et 2 en fonction de la stratégie choisie. Par conséquent, le bloc OU 12 peut recevoir des signaux de pilotage d'abord d'un bloc fonctionnel 13 de stratégie Sa qui est conçu pour calculer un rapport de démultiplication constant en prenant en compte uniquement la valeur de consigne de l'angle de braquage (position a) du sélecteur 5).

Le bloc OU 12 peut également recevoir les signaux de pilotage d'un bloc fonctionnel 14 de stratégie Sb dans lequel est mise en oeuvre la loi de démultiplication standard (par exemple du type Ackermann), si le sélecteur 5 est placé sur la position b). Dans ce cas également, seule la valeur d'angle de consigne de braquage du volant VD est prise en compte pour la détermination des angles de braquage des roues avec un rapport de démultiplication constant.

Des signaux de pilotage peuvent également être transmis à travers le bloc fonctionnel OU 12 en provenance d'un bloc fonctionnel de calcul 15 (positions c) et d) du sélecteur 5). Dans ce cas, le rapport de démultiplication entre la valeur d'angle de consigne de braquage et les angles de braquage β_{d} et β_{g} est variable.

Le bloc fonctionnel de calcul 15 peut mettre en oeuvre les trois stratégies Sc, Sd et Se symbolisées respectivement par les blocs fonctionnels 16, 17 et 18.

Pour calculer le rapport de démultiplication, le bloc de calcul 15 fait usage, le cas échéant, des informations qui lui sont appliquées par les capteurs 7 à 10 comme expliqué plus en détail par la suite.

La figure 2 montre une cartographie tridimensionnelle C1 qui peut être déposée dans la mémoire du calculateur 3 par exemple et utilisée pour la mise en oeuvre des stratégies de marche avant Sc et Sd. Cette cartographie représente la fonction R=f(V; α), R étant le rapport de démultiplication, V la vitesse longitudinale du véhicule et α l'angle de consigne de braquage c'est à dire l'angle sur lequel le volant VD est tourné par le conducteur du véhicule.

Sur cette cartographie C1, on a tracé une ligne en pointillées L1 qui délimite une zone ZHP correspondant à des valeurs du rapport de démultiplication qui se situent à la limite, voire hors de la plage possible de fonctionnement du véhicule, cette limite étant atteinte lorsque l'accélération transversale γ de celui-ci atteint son maximum (aux environs de 9 m.s⁻², par exemple). Tout le reste de la cartographie, c'est-à-dire une zone ZPF, décrit des valeurs possibles du rapport de démultiplication dans la plage de fonctionnement réel du véhicule.

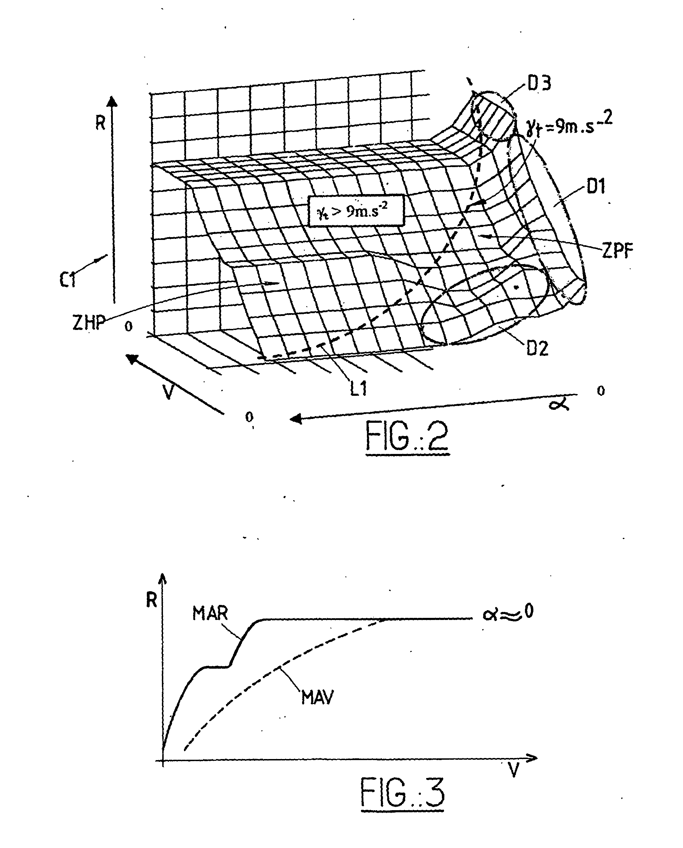

Selon une caractéristique importante de l'invention, les courbes tracées dans les plans R=f(V) pour tout angle de consigne de braquage α de la cartographie et correspondant à la zone ZPF de la plage de fonctionnement possible du véhicule, sont des fonctions à dérivée non nulle. La figure 3 montre à titre illustratif l'une de ces fonctions à dérivée non nulle, extraite de la cartographie de la figure 2; elle est désignée par l'acronyme MAV et correspond à un angle de rotation α du volant VD proche de zéro.

La cartographie de la figure 2 montre également des particularités intéressantes révélées par les domaines indiqués par D1, D2 et D3 et permettant d'optimiser le réglage du rapport de démultiplication R. Ainsi, dans la zone D1 (voir aussi la figure 3), pour des angles faibles de rotation du volant, le rapport de démultiplication R croît avec la vitesse longitudinale V, chaque angle étant associé à une valeur de rapport différente. Il en résulte une sensation de confort pour le conducteur, car aucune discontinuité de réglage ne peut survenir.

Dans la zone D2, il en est de même, aucune plage maintenant le rapport de démultiplication R constant pour différentes valeurs de vitesse et d'angle, n'étant prévue. Par ailleurs, le rapport de démultiplication R est maintenu plus faible que dans une direction assistée classique, mais plus grand que pour des angles de volant plus importants, afin d'accroître le confort de conduite lors d'un braquage pour une manoeuvre de parking, par exemple.

Dans la zone D3, il s'agit de permettre au conducteur d'effectuer en toute sécurité des manoeuvres d'évitement à haute vitesse. On voit que le rapport de démultiplication ne croît plus en fonction de la vitesse V et seulement très faiblement en fonction de l'angle du volant.

La cartographie de la figure 2 peut être mise en oeuvre au moyen d'un processeur classique dûment programmé et travaillant avec une mémoire dans laquelle sont déposées les coordonnées de tous les points de la surface de la cartographie. Toutefois, selon un mode de réalisation préféré de l'invention, les valeurs du rapport de démultiplication R peuvent être déterminées à l'aide de logique floue qui est mise en oeuvre dans le bloc de calcul 15 représenté sur la figure 1. Il exécute un logiciel et met en oeuvre plusieurs traitements flous pour déterminer le rapport démultiplication R.

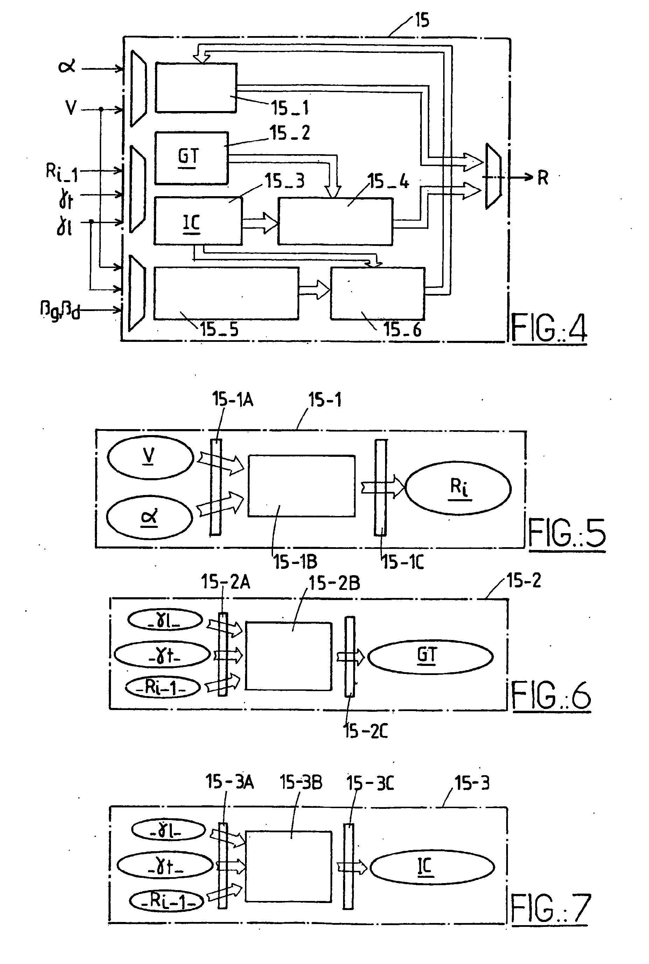

Le bloc de calcul 15 est représenté plus en détail sur la figure 4, la partie concernant la stratégie de marche arrière Se n'étant pas représentée ici. Le calcul en cours dans le bloc 15 fournit le rapport de démultiplication Rᵢ d'itération i en exécutant plusieurs traitements en logique floue. Ainsi, un bloc 15-1 met en oeuvre un calcul du rapport Rᵢ selon la stratégie Sc de niveau 1 représentée par la cartographie de la figure 2 à l'aide d'un traitement flou dont le processus est représenté sur la figure 5.

Pendant le traitement du bloc 15-1, les valeurs numériques d'entrée V et α sont soumises à une fuzzification en 15-1A, puis soumis à un moteur d'inférence 15-1B, à 30 règles floues par exemple, constituant un hyperrectangle d'ordre 2. Le résultat du traitement effectué par le moteur d'inférence 15-1B est soumis à une défuzzification en 15-1C, ce dont il résulte la valeur du rapport de démultiplication Rᵢ recherchée pendant l'itération i. Les règles floues du moteur d'inférence 15-1B sont déterminées au cours d'essais selon des processus à la portée des spécialistes, et traduisent la cartographie C1.

Pour la mise en oeuvre de la stratégie Sd de niveaux 1 et 2 combinés, le bloc de calcul 15 effectue parallèlement, pendant chaque itération i, des traitements flous symbolisés par les blocs 15-2 et 15-3 conduisant respectivement à l'obtention d'un gradient temporel GT défini par une fonction de la forme GT=f (γₗ, γₜ, R, t) et d'un indice de criticité IC défini par une fonction de la forme IC=f (γₗ, γₜ, R, t). Le gradient temporel GT représente en fait une valeur de la forme ΔR/Δt, donc la variation par rapport au temps du rapport de démultiplication R, tandis que l'indice de criticité IC est un facteur de risque qui représente le degré de dangerosité que peut présenter un rapport de démultiplication calculé à l'itération i en fonction des conditions de conduite du moment considéré.

Pendant le traitement dans le bloc 15-2 (figure 6), les valeurs numériques d'entrée γₗ, γₜ et Rᵢ₋₁ sont soumises à une fuzzification en 15-2A, puis à un moteur d'inférence 15-2B, à 45 règles floues par exemple, constituant un hyperrectangle d'ordre 3. Le résultat du traitement effectué par le moteur d'inférence 15-2B est soumis à une défuzzification en 15-2C, ce dont il résulte la valeur du gradient temporel GT recherché pendant l'itération i. Les règles floues du moteur d'inférence 15-2B sont déterminées au cours d'essais selon des processus à la portée des spécialistes.

Pendant le traitement dans le bloc 15-3 (figure 7), les valeurs numériques d'entrée γₗ, γₜ et Rᵢ₋₁ sont soumises à une fuzzification en 15-3A, puis à un moteur d'inférence 15-3B, à 60 règles floues par exemple, constituant un hyperrectangle d'ordre 3. Le résultat du traitement effectué par le moteur d'inférence 15-3B est soumis à une défuzzification en 15-3C, ce dont il résulte la valeur de l'indice de criticité IC recherché pendant l'itération i. Les règles floues du moteur d'inférence 15-3B sont également déterminées au cours d'essais selon des processus à la portée des spécialistes.

Les valeurs du gradient temporel GT et de l'indice de criticité IC sont examinés par un bloc fonctionnel 15-4 mettant en oeuvre un logiciel de diagnostic de ces paramètres. Dans certaines conditions particulières jugées dangereuses pour le comportement du véhicule et décrites ci-après, il peut en résulter un figeage du rapport de démultiplication à la une valeur de sécurité Rₛ de niveau 2. Cette valeur Rₛ s'écarte de la valeur de niveau 1 qu'aurait établi le calcul à l'instant considéré à partir de la cartographie de la figure 2 en l'absence de ces conditions particulières. Cette valeur de sécurité Rₛ de niveau 2 est maintenue jusqu'à ce qu'il soit constaté la disparition des conditions particulières.

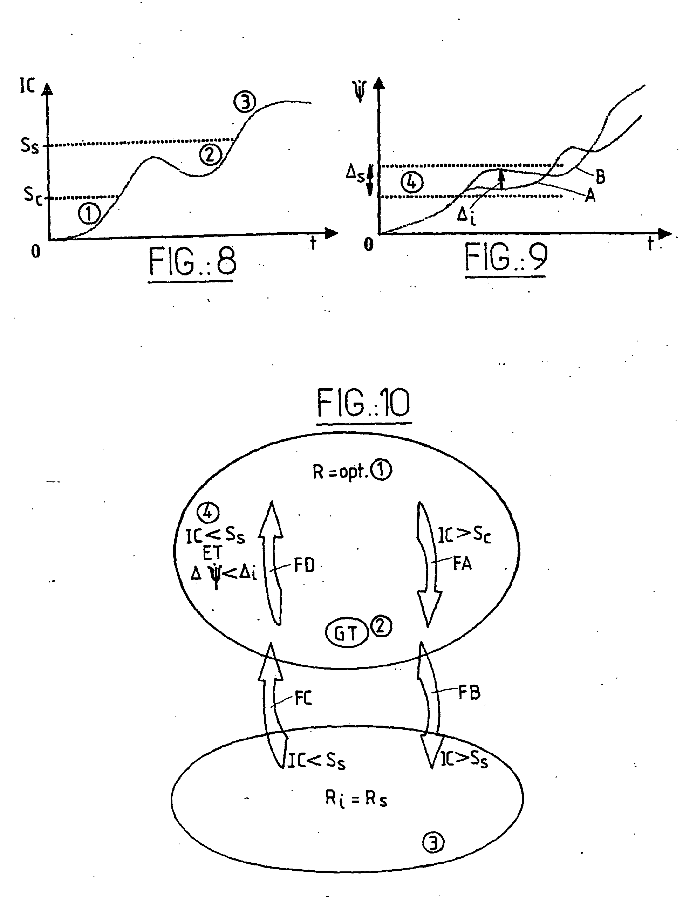

La figure 8 montre une courbe d'évolution de l'indice de criticité IC, pouvant se présenter au cours de la conduite d'un véhicule. La forme de cette courbe n'est donné qu'à titre d'exemple, la figure ne servant qu'à montrer comment l'indice de criticité est examiné par le bloc de diagnostic 15-4. Ce dernier établit un premier seuil S_{c} dit "de confort" en deçà duquel on considère que le bloc de calcul 15 est autorisé à travailler uniquement à l'aide de la cartographie C1 de la figure 2. Le bloc de diagnostic 15-4 établit également un deuxième seuil Sₛ dit "de sécurité" pour l'indice de criticité IC. S'il est constaté que ce dernier se situe entre les seuils S_{c} et Sₛ, le bloc de calcul 15 passe au processus de calcul du rapport de démultiplication de niveau 2. Enfin, si l'indice de criticité IC dépasse le seuil de sécurité Sₛ, le rapport de démultiplication reste figé à une valeur particulière de niveau 2 jusqu'à ce que des conditions plus sûres de conduite soient constatées.

Le bloc de calcul 15 calcule également la variation dans le temps ΔΨ̇ de la vitesse de lacet Ψ̇ du véhicule définie comme étant la vitesse de variation de l'angle de lacet Ψ (rotation du véhicule autour de son axe vertical) fourni par le capteur 10. La figure 9 représente un exemple possible d'évolution de la vitesse de lacet Ψ̇. La courbe A de la figure 9 représente la variation de la vitesse de lacet à une itération i, tandis que la courbe B la représente à une itération i+1. Si l'on constate que les deux courbes ont un écart Δi (bloc fonctionnel 15-5) ne dépassant pas une valeur d'écart de sécurité Δₛ prédéterminée, on considère que les conditions sont réunies pour autoriser le passage du calcul du niveau 2 vers le calcul de niveau 1 du rapport de démultiplication, opération qui est symbolisé par le bloc 15-6 de la figure 4. Cette autorisation est donnée à condition que l'indice de criticité IC soit de nouveau descendu en dessous du seuil de confort S_{c}. Le bloc fonctionnel 15-6 reçoit cette information du bloc 15-3 de calcul de l'indice IC.

On va se référer maintenant à la figure 10 qui représente un organigramme illustrant comment, selon la stratégie Sd combinée, le bloc de calcul 15 détermine le rapport de démultiplication R selon quatre modes de calcul pouvant se présenter au cours de la conduite du véhicule. Pour la commodité de l'exposé, ces quatre modes de calcul sont repérés par les chiffres 1 à 4 entourés d'un petit cercle. Ils se définissent comme suit:
Mode 1 Calcul du rapport de multiplication optimal à l'aide de la cartographie C1 de la figure 2 en fonction de la vitesse longitudinale V et de l'angle de consigne de volant α.
Mode 2 Calcul du rapport de démultiplication s'écartant de la cartographie C1 et déterminant la valeur du rapport en fonction d'une pente de variation établie sur la base du gradient temporel GT instantané.
Mode 3 Maintien à une valeur constante du rapport de démultiplication calculé à partir de la valeur obtenue au cours de l'itération précédente i-1 des modes 2 et 3;
Mode 4 Examen des conditions de sécurité régnant pendant le mode 3 et passage vers le mode 1 si les conditions de sécurité sont de nouveau satisfaites.

Les flèches FA à FD de la figure 10 symbolisent le passage d'un mode à l'autre, les conditions de passage étant indiquées à côté de chaque flèche.

Ainsi, le programme exécuté par le bloc de calcul 15 passe du mode 1 au mode 2, si indice de criticité IC dépasse vers le haut le seuil de confort S_{c} (flèche FA et figure 8). Il passe du mode 2 au mode 3 (flèche FB), si cet indice de criticité dépasse vers le haut le seuil de sécurité Sₛ. Le mode 3 est abandonné, si l'indice de criticité IC franchit vers le bas le seuil de sécurité Sₛ (flèche FC) et le mode 2 est alors de nouveau installé. Si, enfin, l'indice de criticité IC franchit vers le bas le seuil de confort S_{c} et si simultanément la variation de la vitesse de lacet ΔΨ̇ est inférieure à la variation autorisée Δi (figure 9), le calculateur 15 retourne au mode 1 de calcul du rapport de démultiplication optimal.

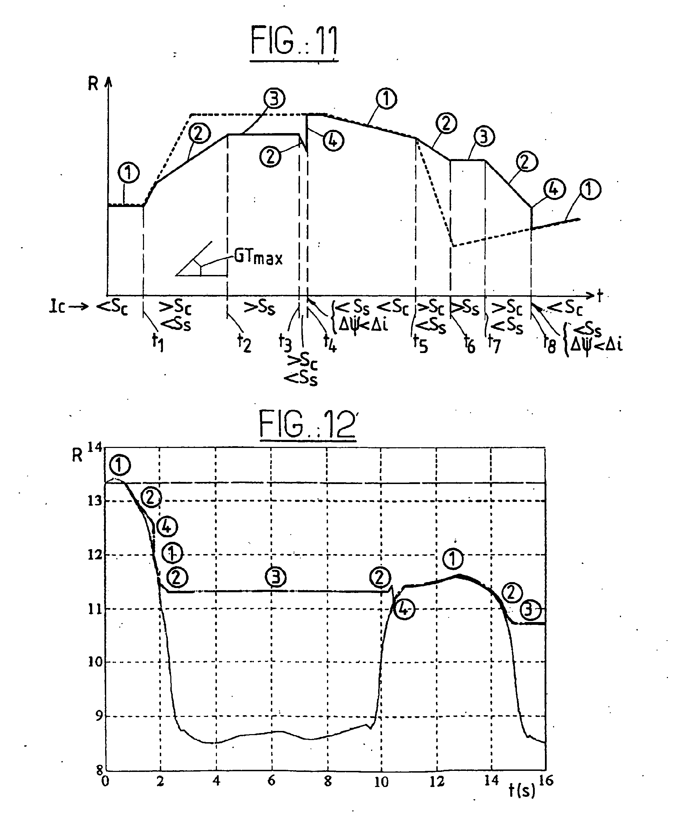

La figure 11 montre comment, selon la stratégie combinée Sd, le rapport de démultiplication R peut varier en fonction du temps en passant d'un mode fonctionnel à l'autre. Il s'agit ici d'un exemple théorique de conduite d'un véhicule. La courbe en trait plein représente l'évolution du rapport R en fonction des conditions supposées de conduite (calculs de niveaux 1 et 2), tandis que la courbe en pointillés représente le cas où le bloc de calcul 15 travaille uniquement au niveau 1 en suivant en permanence la cartographie C1 de la figure 2. A noter que les deux courbes se recouvrent pendant le fonctionnement en mode 1. En dessous de l'axe des ordonnées, on a indiqué de nouveau les conditions de passage d'un mode à l'autre.

Dans le cas de la figure 11, on suppose que le véhicule se déplace alors que le mode 1 est en vigueur. A un instant t1, le conducteur du véhicule accélère fortement ce qui fait monter l'indice de criticité IC au-dessus du seuil S_{c} et fait passer le bloc de calcul 15 du mode 1 en mode 2. Dans ces conditions, en fonction de la valeur du gradient GT calculé à partir de l'instant t1, la pente de la variation du rapport R est figée à une certaine valeur, la pente ne pouvant, en tout état de cause, pas dépasser une valeur Gtmax, par exemple pendant le fonctionnement en mode 2. On peut fixer la limite par exemple à +/-20% par seconde de la valeur calculée à l'itération précédente.

Au temps t2, l'indice de sécurité franchit vers le haut également le seuil Sₛ de sorte que le mode 3 est instauré. La valeur du rapport R est donc figée à la valeur calculée au cours de la dernière itération ayant eu lieu pendant le fonctionnement en mode 2.

Au temps t3, le seuil de sécurité Sₛ est franchi vers le bas par l'indice de sécurité IC de sorte que le mode 2 est brièvement instauré pour faire varier le rapport R avec la pente calculée. Dès que, pendant le fonctionnement en mode 4 qui s'en suit, les deux conditions requises sont satisfaites (voir flèche FD de la figure 10), le fonctionnement passe en mode 1 à partir de l'instant t4 jusqu'à l'instant t5. Puis, le calcul suit ensuite successivement les modes 2, 3, 2 et 1 selon les mêmes processus de calcul, le véhicule ayant dans ce cas été fortement décéléré par le conducteur.

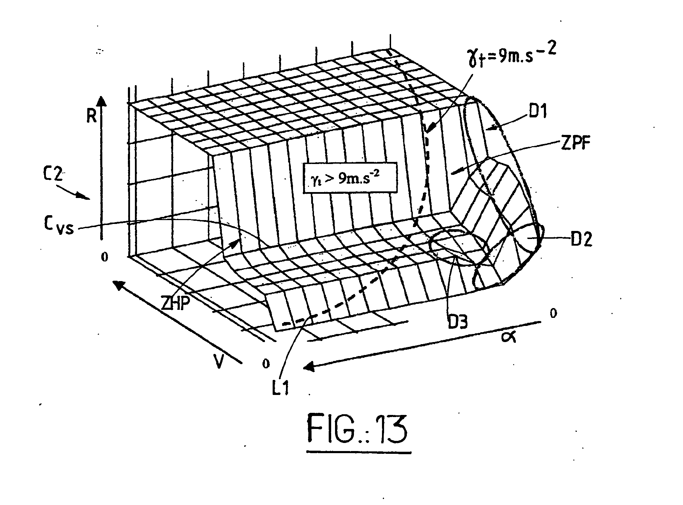

La figure 12 est un graphique représentant un cas concret de conduite d'un véhicule équipé d'un système mettant en oeuvre le procédé selon l'invention, le relevé de ce graphique ayant été fait sur une durée réelle de déplacement du véhicule de 16 secondes. Il a été fait deux fois, la première alors que le sélecteur 5 était placé sur la position c) et la seconde lorsque ce dernier était placé sur la position d). La courbe en trait plein correspond au premier passage et la courbe en trait mixte au second, étant entendu que pendant que le bloc de calcul 15 fonctionnait en mode 1, les deux courbes se recouvraient. Le trait en pointillés indique un rapport de démultiplication constant, lorsque le sélecteur 5 est placé sur la position a).

La figure 13 représente un exemple préféré de cartographie tridimensionnelle C2 pouvant être utilisée pour déterminer le rapport de démultiplication R de la direction d'un véhicule, lorsqu'il se déplace en marche arrière. Comparé à la figure 2, cette cartographie C2 représente également la fonction R=f (V, α) dont les paramètres sont portés sur les mêmes axes de coordonnées respectifs, encore que, bien entendu, la vitesse longitudinale V du véhicule soit ici portée avec le signe inverse et que les échelles de l'axe de vitesse soit différente que sur la figure 2.

Sur cette cartographie C2 sont également définies une zone ZHP correspondant à des valeurs limites ou impossibles de fonctionnement du véhicule et une zone ZPF décrivant les valeurs possibles du rapport de démultiplication R, les deux zones étant séparées par une ligne en pointillées tracées pour des valeurs de l'accélération transversale égales à une limite prédéterminée, de γₜ = 9 m/sec² par exemple.

Selon une caractéristique importante de l'invention, cette cartographie C2 de marche arrière est tracée de telle manière qu'elle définisse une courbe de seuils de vitesse C_{Vs} pour toute valeur possible de l'angle de volant α. Pour des valeurs de vitesse situées en dessous de cette courbe de seuil, le rapport R aura toujours une valeur relativement faible pour garantir que le conducteur ressent un certain confort pendant les manoeuvres en marche arrière, comme par exemple pour faire un créneau. Les domaines les plus utilisés sur la cartographie en conduite normale sont ceux indiqués par les traits pleins D1 et D2. Le choix du tracé de la cartographie dans ces deux domaines apportent un gain en confort par rapport à la marche avant du véhicule.

Au-delà de cette courbe de seuils de vitesse, le rapport R croît très brusquement pour toutes les valeurs d'angle α du volant VD afin d'éviter des instabilités en marche arrière susceptibles de nuire à la sécurité de la conduite.

Dans les domaines D1 et D2 de la cartographe C2, qui sont parcourus le plus souvent pendant une marche arrière, les points de la cartographie C2 ont été choisis de telle manière que le confort de conduite soit optimal, de faibles angles de volant créant des rapports de démultiplication R plus élevés, tant que la vitesse V reste également faible. Le domaine D3 représente des situations sensibles de conduite dans lesquelles on atteint les limites de l'accélération transversale admissible. Là encore les points de la cartographie C2 sont choisis de telle manière que la régulation du rapport de démultiplication R aide le conducteur à conserver au maximum toute la sécurité de la manoeuvre, en particulier pour l'évitement d'obstacles surgissant brusquement par exemple.

La stratégie de marche arrière Se est de préférence mise en oeuvre à l'aide d'un traitement en logique floue de même nature que celui décrit à propos de la figure 5.

On notera que sur la figure 3, on a tracé à titre indicatif, pour une faible valeur de l'angle de consigne de braquage α une courbe MAR du rapport de démultiplication R en marche arrière extraite de la cartographie C2 de la figure 13.

Il est à noter également que le procédé selon l'invention peut n'impliquer que la mise en oeuvre de certaines stratégies parmi celles qui ont été décrites ci-dessus, l'exemple de réalisation décrit supposant que toutes les stratégies peuvent être mises en oeuvre au choix du conducteur du véhicule. Bien entendu, si une seule stratégie est prévue, il n'est pas utile de prévoir le sélecteur 5. On notera également que la mise en oeuvre des deux stratégies Sd et Se à la fois apportent le maximum de sécurité et de confort et que la présence des moyens pour les réaliser constitue donc le mode de réalisation préféré du procédé selon l'invention.

## Revendications

1. Procédé pour déterminer le rapport de démultiplication (R) de la direction d'un véhicule automobile, cette direction comprenant pour chacune des roues directrices (R_{droite}, R_{gauche}) de celui-ci, un actionneur (1, 2) qui est commandé par un signal de pilotage établi par l'intermédiaire d'un calculateur (3), ce dernier étant agencé pour élaborer les signaux de pilotage par l'intermédiaire d'une cartographie tridimensionnelle (C1) définissant les valeurs dudit rapport de démultiplication en fonction de la vitesse longitudinale (V) du véhicule et de l'angle de consigne (α) donné par le volant de direction (VD), le procédé consistant, au cours d'itérations successives (i), à relever la vitesse longitudinale (V) du véhicule et l'angle de consigne (α) instantané de rotation du volant de direction de celui-ci, le rapport de démultiplication (R) étant calculé au cours de chacune desdites itérations par extraction de la valeur de ce rapport de ladite cartographie (C1) en fonction des valeurs instantanées de ladite vitesse et dudit angle,
**caractérisé en ce que** ladite cartographie (C1) est établie de telle manière que, pour chaque valeur de l'angle de rotation (α) dudit volant, la relation entre la vitesse longitudinale (V) du véhicule et le rapport de démultiplication (R) suit une courbe à dérivée non nulle (MAV) quand le véhicule est en marche avant.

2. Procédé selon la revendication 1, **caractérisé en ce qu**'il consiste également
- à relever les accélérations longitudinale et transversale (γₗ, γₜ) dudit véhicule,
- au cours de chaque itération (i), à calculer un indice de criticité (IC) en fonction des valeurs instantanées desdites accélérations (γₗ, γₜ) et de la valeur dudit rapport de démultiplication (Rᵢ₋₁) calculée au cours de l'itération précédente (i-1), et à déterminer le rapport de démultiplication de l'itération en cours (Rᵢ) à partir d'une valeur (Rₛ) située hors du tracé de ladite cartographie, si l'indice de criticité (IC) dépasse au moins un seuil prédéterminé (S_{c}, Sₛ).

3. Procédé selon la revendication 2, **caractérisé en ce qu**'il consiste:
- à calculer un gradient temporel (GT) de variation dudit rapport de démultiplication (R) calculé au cours des itérations successives (i),
- et à déterminer le rapport de démultiplication de l'itération en cours (Rᵢ), en fonction de la valeur de ce gradient temporel (GT) lorsque l'indice de criticité dépasse un premier seuil (S_{c}) dont le franchissement vers le haut est considéré comme représentatif de la perte d'une situation de confort telle que ressentie par le conducteur du véhicule.

4. Procédé selon la revendication 3, **caractérisé en ce que** ledit gradient temporel (GT) appliqué au cours d'une itération en cours (i) est déterminé en fonction desdites accélérations longitudinale et latérale (γₗ, γₜ) et de la valeur dudit rapport de démultiplication calculé au cours de l'itération précédente (Rᵢ₋₁).

5. Procédé selon l'une quelconque des revendications 3 et 4, **caractérisé en ce qu**'il consiste:
pendant une itération en cours (i), à maintenir ledit rapport de démultiplication (R) à la valeur calculée au cours de l'itération précédente, lorsque ledit indice de criticité (IC) dépasse un deuxième seuil (Sₛ) qui est supérieur audit premier seuil (S_{c}) et dont le franchissement vers le haut est considéré comme représentatif de la perte d'une situation de sécurité pour la conduite du véhicule.

6. Procédé selon la revendication 5, **caractérisé en ce qu**'il consiste:
pendant les itérations au cours desquelles le rapport de démultiplication (R) est maintenu constant par franchissement dudit second seuil (Sₛ), à surveiller ledit indice de criticité (IC) et, lorsque celui-ci franchit ledit second seuil (Sₛ) vers le bas, à calculer ledit rapport de démultiplication (R) en fonction dudit gradient temporel (GT) au cours des itérations suivantes.

7. Procédé suivant la revendication 6, **caractérisé en ce qu**'il consiste en outre:
à relever la vitesse de lacet (Ψ̇) dudit véhicule,
à déterminer un intervalle prédéterminé (Δᵢ) de variation de ladite vitesse de lacet (Ψ̇),
pendant les itérations en cours au cours desquelles ledit rapport de démultiplication (R) est calculé en fonction dudit gradient temporel (GT), à surveiller ledit indice de criticité (IC) et lorsque celui-ci franchit vers le bas ledit premier seuil (S_{c}) et lorsque simultanément ladite vitesse de lacet (Ψ̇) varie d'une valeur inférieure audit intervalle de variation prédéterminée (Δᵢ), à restaurer un régime de calcul dudit rapport de démultiplication uniquement sur la base de ladite cartographie (C1).

8. Procédé suivant l'une quelconque des revendications précédentes, **caractérisé en ce que** ladite cartographie (C1) est mise en oeuvre à l'aide d'un traitement en logique floue.

9. Procédé suivant l'une quelconque des revendications 2 à 8, **caractérisé en ce que** ledit indice de criticité (IC) est calculé à l'aide d'un traitement en logique floue.

10. Procédé suivant l'une quelconque des revendications 3 à 9, **caractérisé en ce que** ledit gradient temporel (GT) est calculé à l'aide d'un traitement en logique floue.

11. Procédé suivant l'une quelconque des revendications 1 à 10, **caractérisé en ce qu**'il consiste à engendrer un signal représentatif de la sélection de la marche arrière du véhicule (MAV/MAR), et à déterminer le rapport de démultiplication (R) en fonction d'une cartographie tridimensionnelle de marche arrière (C2), différente de ladite cartographie (C1) lorsque ledit signal indique une marche arrière du véhicule, ladite cartographie de marche arrière définissant l'évolution dudit rapport de multiplication en fonction de l'angle de consigne de braquage (α) du volant de direction du véhicule et la vitesse longitudinale (V) de celui-ci.

12. Procédé suivant la revendication 11, **caractérisé en ce que** ladite cartographie de marche arrière (C2) définit une limite de vitesse (C_{Vs}) pour toute valeur possible de l'angle de consigne de braquage (α), **en ce que** pour des valeurs de vitesse situées en dessous de cette limite de vitesse, le rapport (R) présente une valeur relativement faible et **en ce qu'**au-delà de cette limite de vitesse, le rapport (R) croît très brusquement pour toutes les valeurs d'angle de consigne (α).

13. Procédé de détermination du rapport de démultiplication d'une direction de véhicule, **caractérisé en ce qu**'il consiste à déclencher sélectivement la mise en oeuvre du procédé suivant la revendication 1 ou celle du procédé suivant les revendications 2 à 6 prises ensemble au moyen d'un sélecteur de stratégie (5) à la disposition du conducteur du véhicule.

## Claims

1. Procedure for determining the geardown ratio (R) of the steering of a motor vehicle, this steering comprising for each of the steerable wheels (R_{right}, R_{left}) of the vehicle, an actuator (1, 2) which is controlled by a command signal established by way of a computer (3), the latter being devised to formulate the command signals by way of a three-dimensional mapping (C1) defining the values of the said geardown ratio as a function of the longitudinal speed (V) of the vehicle and of the setpoint angle (α) given by the steering wheel (VD), the procedure consisting, in the course of successive iterations (i), in logging the longitudinal speed (V) of the vehicle and the instantaneous setpoint angle (α) of rotation of the steering wheel of the latter, the geardown ratio (R) being computed in the course of each of the said iterations by extraction of the value of this ratio from the said mapping (C1) as a function of the instantaneous values of the said speed and of the said angle,
**characterized in that** the said mapping (C1) is established in such a way that, for each value of the angle of rotation (α) of the said steering wheel, the relation between the longitudinal speed (V) of the vehicle and the geardown ratio (R) follows a curve with non-zero derivative (MAV) when the vehicle is moving forwards.

2. Procedure according to Claim 1, **characterized in that** it consists also:
- in logging the longitudinal and transverse accelerations (γₗ, γₜ) of the said vehicle,
- in the course of each iteration (i), in computing a criticality index (IC) as a function of the instantaneous values of the said accelerations (γₗ, γₜ) and of the value of the said geardown ratio (Rᵢ₋₁) computed in the course of the previous iteration (i-1), and in determining the geardown ratio of the current iteration (Rᵢ) on the basis of a value (Rₛ) lying off the plot of the said mapping, if the criticality index (IC) exceeds at least one predetermined threshold (S_{c}, Sₛ ) .

3. Procedure according to Claim 2, **characterized in that** it consists:
- in computing a time gradient (GT) of variation of the said geardown ratio (R) computed in the course of the successive iterations (i),
- and in determining the geardown ratio of the current iteration (Rᵢ) as a function of the value of this time gradient (GT) when the criticality index exceeds a first threshold (S_{c}) the crossing above of which is considered to be representative of the loss of a situation of comfort as felt by the driver of the vehicle.

4. Procedure according to Claim 3, **characterized in that** the said time gradient (GT) applied in the course of a current iteration (i) is determined as a function of the said longitudinal and lateral accelerations (γₗ, γₜ) and of the value of the said geardown ratio computed in the course of the previous iteration (Rᵢ₋₁).

5. Procedure according to any one of Claims 3 and 4, **characterized in that** it consists:
- during a current iteration (i), in keeping the said geardown ratio (R) at the value computed in the course of the previous iteration, when the said criticality index (IC) exceeds a second threshold (Sₛ) which is greater than the said first threshold (S_{c}) and the crossing above of which is considered to be representative of the loss of a situation of safety for the driving of the vehicle.

6. Procedure according to Claim 5, **characterized in that** it consists:
- during the iterations in the course of which the geardown ratio (R) is kept constant by crossing of the said second threshold (Sₛ), in monitoring the said criticality index (IC) and, when the latter crosses below the said second threshold (Sₛ) , in computing the said geardown ratio (R) as a function of the said time gradient (GT) in the course of the following iterations.

7. Procedure according to Claim 6, **characterized in that** it consists furthermore:
- in logging the yaw rate (Ψ̇) of the said vehicle,
- in determining a predetermined interval (Δᵢ) of variation of the said yaw rate (Ψ̇),
- during the current iterations in the course of which the said geardown ratio (R) is computed as a function of the said time gradient (GT), in monitoring the said criticality index (IC) and when the latter crosses below the said first threshold (S_{c}) and when simultaneously the said yaw rate (Ψ̇) varies by a value which is less than the said predetermined variation interval (Δᵢ), in reverting to a regime of computation of the said geardown ratio solely on the basis of the said mapping (C1).

8. Procedure according to any one of the preceding claims, **characterized in that** the said mapping (C1) is implemented with the aid of fuzzy logic processing.

9. Procedure according to any one of Claims 2 to 8, **characterized in that** the said criticality index (IC) is computed with the aid of fuzzy logic processing.

10. Procedure according to any one of Claims 3 to 9, **characterized in that** the said time gradient (GT) is computed with the aid of fuzzy logic processing.

11. Procedure according to any one of Claims 1 to 10, **characterized in that** it consists in devising a signal representative of the selection of the reversing of the vehicle (MAV/MAR), and in determining the geardown ratio (R) as a function of a reversing three-dimensional mapping (C2), different from the said mapping (C1) when the said signal indicates a reversing of the vehicle, the said reversing mapping defining the evolution of the said gear ratio as a function of the setpoint angle of lock (α) of the steering wheel of the vehicle and the latter's longitudinal speed (V).

12. Procedure according to Claim 11, **characterized in that** the said reversing mapping (C2) defines a limit of speed (C_{Vs}) for every possible value of the setpoint angle of lock (α), **in that** for speed values lying below this speed limit, the ratio (R) exhibits a relatively low value and **in that** beyond this speed limit, the ratio (R) rises very abruptly for all the values of setpoint angle (α).

13. Procedure for determining the geardown ratio of a vehicle steering, **characterized in that** it consists in selectively triggering the implementation of the procedure in accordance with claim 1 or that of the procedure in accordance with claims 2 to 6 taken together by means of a strategy selector (5) available to the driver of the vehicle.

## Patentansprüche

1. Verfahren zur Bestimmung des Übersetzungsverhältnisses (R) der Lenkung eines Kraftfahrzeugs, wobei diese Lenkung für jedes von dessen Vorderrädern (R_{rechts}, Rₗᵢₙₖₛ) einen Stellantrieb (1, 2) aufweist, der von einem Steuersignal gesteuert wird, das mittels eines Rechners (3) erstellt wird, wobei letzterer ausgelegt ist, um die Steuersignale mittels einer dreidimensionalen Kartographie (C1) zu erarbeiten, die die Werte des Übersetzungsverhältnisses in Abhängigkeit von der Längsgeschwindigkeit (V) des Fahrzeugs und dem vom Lenkrad (VD) vorgegebenen Sollwinkel (α) definiert, wobei das Verfahren während aufeinander folgender Iterationen (i) darin besteht, die Längsgeschwindigkeit (V) des Fahrzeugs und den augenblicklichen Sollwinkel (α) der Drehung des Lenkrads dieses Fahrzeugs zu erfassen, wobei das Übersetzungsverhältnis (R) während jeder dieser Iterationen durch Extrahieren des Werts dieses Verhältnisses aus der Kartographie (C1) in Abhängigkeit von den Augenblickswerten der Geschwindigkeit und des Winkels berechnet wird,
**dadurch gekennzeichnet, dass** die Kartographie (C1) so erstellt wird, dass für jeden Wert des Drehwinkels (α) des Lenkrads die Beziehung zwischen der Längsgeschwindigkeit (V) des Fahrzeugs und dem Übersetzungsverhältnis (R) einer Kurve mit einem Differenzquotient ungleich Null (MAV) folgt, wenn das Fahrzeug im Vorwärtsgang ist.

2. Verfahren nach Anspruch 1, **dadurch gekennzeichnet, dass** es ebenfalls darin besteht
- die Längs- und Querbeschleunigungen (γₗ, γₜ) des Fahrzeugs festzustellen,
- während jeder Iteration (i) einen Kritikalitätsindex (IC) in Abhängigkeit von den Augenblickswerten der Beschleunigungen (γₗ, γₜ) und vom Wert des Übersetzungsverhältnisses (Rᵢ₋₁) zu berechnen, der während der vorhergehenden Iteration (i-1) berechnet wurde, und das Übersetzungsverhältnis der laufenden Iteration (Rᵢ) ausgehend von einem Wert (Rₛ) zu bestimmen, der sich außerhalb des Verlaufs der Kartographie befindet, wenn der Kritikalitätsindex (IC) mindestens eine vorbestimmte Schwelle (S_{c}, Sₛ) überschreitet.

3. Verfahren nach Anspruch 2, **dadurch gekennzeichnet, dass** es darin besteht:
- einen Zeitgradient (GT) der Veränderung des Übersetzungsverhältnisses (R) zu berechnen, das während der aufeinanderfolgenden Iterationen (i) berechnet wird,
- und das Übersetzungsverhältnis der laufenden Iteration (Rᵢ) in Abhängigkeit vom Wert dieses Zeitgradienten (GT) zu bestimmen, wenn der Kritikalitätsindex eine erste Schwelle (S_{c}) überschreitet, deren Überschreiten als repräsentativ für den Verlust einer Komfortsituation angesehen wird, wie er vom Fahrzeuglenker empfunden wird.

4. Verfahren nach Anspruch 3, **dadurch gekennzeichnet, dass** der im Lauf einer laufenden Iteration (i) angewendete Zeitgradient (GT) in Abhängigkeit von den Längs- und Querbeschleunigungen (γₗ, γₜ) und vom Wert des Übersetzungsverhältnisses bestimmt wird, das während der vorhergehenden Iteration (Rᵢ₋₁) berechnet wird.

5. Verfahren nach einem der Ansprüche 3 und 4, **dadurch gekennzeichnet, dass** es darin besteht:
während einer laufenden Iteration (i) das Übersetzungsverhältnis (R) auf dem während der vorhergehenden Iteration berechneten Wert zu halten, wenn der Kritikalitätsindex (IC) eine zweite Schwelle (Sₛ) überschreitet, die höher ist als die erste Schwelle (S_{c}) und deren Überschreiten als repräsentativ für den Verlust einer Sicherheitssituation für das Lenken des Fahrzeugs angesehen wird.

6. Verfahren nach Anspruch 5, **dadurch gekennzeichnet, dass** es darin besteht:
während der Iterationen, in deren Verlauf das Übersetzungsverhältnis (R) durch Überschreiten der zweiten Schwelle (Sₛ) konstant gehalten wird, den Kritikalitätsindex (IC) zu überwachen und, wenn dieser die zweite Schwelle (Sₛ) unterschreitet, das Übersetzungsverhältnis (R) während der folgenden Iterationen in Abhängigkeit vom Zeitgradienten (GT) zu berechnen.

7. Verfahren nach Anspruch 6, **dadurch gekennzeichnet, dass** es außerdem darin besteht:
die Giergeschwindigkeit (Ψ) des Fahrzeugs festzustellen,
ein vorbestimmtes Intervall (Δᵢ) der Veränderung der Giergeschwindigkeit (Ψ̇) zu bestimmen,
während der laufenden Iterationen, in deren Verlauf das Übersetzungsverhältnis (R) in Abhängigkeit vom Zeitgradient (GT) berechnet wird, den Kritikalitätsindex (IC) zu überwachen, und
wenn dieser die erste Schwelle (S_{c}) unterschreitet, und wenn gleichzeitig die Giergeschwindigkeit (Ψ̇) um einen geringeren Wert als das vorbestimmte Veränderungsintervall (Δᵢ) variiert, einen Betrieb der Berechnung des Übersetzungsverhältnisses nur auf der Basis der Kartographie (C1) wiederherzustellen.

8. Verfahren nach einem der vorhergehenden Ansprüche, **dadurch gekennzeichnet, dass** die Kartographie (C1) mit Hilfe einer Fuzzy-Logik-Verarbeitung angewendet wird.

9. Verfahren nach einem der Ansprüche 2 bis 8, **dadurch gekennzeichnet, dass** der Kritikalitätsindex (IC) mit Hilfe einer Fuzzy-Logik-Verarbeitung berechnet wird.

10. Verfahren nach einem der Ansprüche 3 bis 9, **dadurch gekennzeichnet, dass** der Zeitgradient (GT) mit Hilfe einer Fuzzy-Logik-Verarbeitung berechnet wird.

11. Verfahren nach einem der Ansprüche 1 bis 10, **dadurch gekennzeichnet, dass** es darin besteht, ein Signal zu erzeugen, das für die Wahl des Rückwärtsgangs des Fahrzeugs (MAV/MAR) repräsentativ ist, und das Übersetzungsverhältnis (R) in Abhängigkeit von einer dreidimensionalen Rückwärtsgang-Kartographie (C2) zu bestimmen, die sich von der Kartographie (C1) unterscheidet, wenn das Signal einen Rückwärtsgang des Fahrzeugs anzeigt, wobei die Rückwärtsgang-Kartographie die Entwicklung des Übersetzungsverhältnisses in Abhängigkeit vom Einschlagsollwinkel (α) des Lenkrads des Fahrzeugs und der Längsgeschwindigkeit (V) des Fahrzeugs definiert.

12. Verfahren nach Anspruch 11, **dadurch gekennzeichnet, dass** die Rückwärtsgang-Kartographie (C2) eine Geschwindigkeitsbegrenzung (C_{Vs}) für jeden möglichen Wert des Einschlagsollwinkels (α) definiert, dass für Geschwindigkeitswerte, die sich unter dieser Geschwindigkeitsbegrenzung befinden, das Verhältnis (R) einen relativ geringen Wert aufweist, und dass über diese Geschwindigkeitsbegrenzung hinaus das Verhältnis (R) für alle Sollwinkelwerte (α) sehr abrupt ansteigt.

13. Verfahren zur Bestimmung des Übersetzungsverhältnisses einer Fahrzeuglenkung, **dadurch gekennzeichnet, dass** es darin besteht, selektiv die Anwendung des Verfahrens nach Anspruch 1 oder diejenige des Verfahrens gemäß den Ansprüchen 2 bis 6 gemeinsam mittels eines Strategiewählers (5) auszulösen, der dem Fahrzeuglenker zur Verfügung steht.
